# EUROPEAN PATENT SPECIFICATION

(11) **EP 4 301 015 B1**
(45) Date of publication and mention of the grant of the patent: **06.05.2026**
(21) Application number: 22810187.9
(22) Date of filing: 30.03.2022
(51) Int. Cl.: H04W 4/70, H04W 88/04, H04W 88/06, H04W 8/00, H04L 12/12, H04L 67/12, H04W 52/02, H04W 84/18, H04W 40/10, H04W 40/12, H04W 40/22, H04W 84/22, H04W 4/80, H04W 76/14

(54) **NETWORK AUTOMATIC CONTROL METHOD AND DEVICE FOR A TRACKER AND STORAGE MEDIUM**
VERFAHREN UND VORRICHTUNG ZUR AUTOMATISCHEN NETZWERKSTEUERUNG FÜR EINEN TRACKER UND SPEICHERMEDIUM
PROCÉDÉ ET DISPOSITIF DE COMMANDE AUTOMATIQUE DE RÉSEAU POUR UN DISPOSITIF DE SUIVI ET SUPPORT DE STOCKAGE

(30) Priority: 28.05.2021 CN 202110597135
(43) Date of publication of application: 03.01.2024
(73) Proprietor: ZTE Corporation, Shenzhen, Guangdong 518057 (CN)
(72) Inventor: SUN, Quan, Shenzhen, Guangdong 518057 (CN)
(74) Representative: Savi, Massimiliano
(86) International application number: PCT/CN2022/084061
(87) International publication number: WO 2022/247454

(56) References cited:
- WO-A1-2020/153897
- CN-A- 103 230 120
- CN-A- 106 211 133
- CN-A- 111 246 529
- US-A1- 2014 062 695
- US-A1- 2016 262 094
- US-A1- 2018 352 530
- RAPPORTEUR (SAMSUNG): "TS 36.523-1 Tracker status before RAN5#91-e", 3GPP DRAFT; R5-212139, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG5, no. Electronic Meeting; 20210517 - 20210528, 7 May 2021 (2021-05-07), Mobile Competence Centre ; 650, route des Lucioles ; F-06921 Sophia-Antipolis Cedex ; France , XP052002723

## Description

### TECHNICAL FIELD

The present disclosure relates to the field of Internet of Things, and more particularly, to a low-power automatic network control method, apparatus, and device for a tracker, and a storage medium.

### BACKGROUND

In Internet of Things (IoT) systems, there are long-range communication modes such as 2nd-Generation Wireless Telephone Technology (2G), Long Term Evolution (LTE), and Narrow Band IoT (NB-IoT), as well as short-range communication modes such as Wireless Fidelity (WIFI), Bluetooth (BT), Near Field Communication (NFC), Zigbee, Ultra Wide Band (UWB), and Radio Frequency Identification (RFID). The co-existence of various long-range communication modes and short-range communication modes not only increases the difficulty of Printed Circuit Board (PCB) layout in products, but also increases the overall power consumption and overall heat generation.

As an important component in the layout of IoT systems, a tracker has limited space for PCBs, but has high requirements on power consumption and heat generation. Therefore, it is necessary to improve user experience of the tracker and reduce the overall heat generation and overall power consumption of the tracker.

US20160262094A1 relates to an accessory device that may operate in a first mode, where the first radio of the accessory device is configured to perform cellular communication with a base station, or a second mode, where the second radio of the accessory device is configured to perform short-range communication with a companion device and utilize cellular functionality of the companion device to provide cellular communications through the companion device to the base station. The accessory device may operate to selectively transition between the first mode and the second mode based on one or more factors, such as signal strength of the short-range communication between the accessory device and the companion device, the relative batter level of the two devices, and/or a communications status of the companion device.

WO2020153897A1 relates to methods, a location tracking system and a portable location tracker for low power consuming uses cases when the state or position of the tracker needs to be determined also when the tracker is outside short-range wireless communication range with a mobile communications device. The technology disclosed further relates to a low power consuming location tracker system for controlling a plurality of portable location trackers comprising a movement sensor and a remote control and monitoring system for communicating with the portable location trackers via a cellular radio communications network.

US20180352530A1 relates to methods and apparatus to enable and disable cellular services for one or more cellular capable secondary wireless devices associated with a primary wireless device. The primary wireless device, in response to detecting a status change of an in use state of a cellular capable secondary wireless device can provide a notification to a network server of a wireless network to disable cellular wireless services for previously enabled cellular capable secondary wireless devices and to enable cellular wireless services for the cellular capable secondary wireless device. Control of cellular wireless services for cellular capable secondary wireless devices can be based on a combination of registration for services, activation and deactivation of eSIMs on the cellular capable secondary wireless devices, and/or changes to eSIM states or contexts maintained by the network server.

### SUMMARY

The invention is set out in the appended set of claims.

The present disclosure provides an automatic network control method, apparatus, and device for a tracker, and a storage medium, to reduce the overall heat generation and overall power consumption of the tracker, so as to improve user experience of the tracker.

The present disclosure provides an automatic network control method for a tracker. The method includes: performing, by the tracker, short-range communication with another device to determine whether the another device can provide a remote communication function for the tracker; disabling, by the tracker, a remote communication function of the tracker in response to determining that the another device can provide the remote communication function for the tracker; and performing, by the tracker after disabling the remote communication function, data exchange with a data center through the another device which can provide the remote communication function for the tracker.

The present disclosure further provides an automatic network control device for a tracker. The device includes a memory, a processor, and a program stored in the memory and executable by the processor, where the program, when executed by the processor, causes the processor to implement the above automatic network control method for a tracker.

The present disclosure further provides a storage medium for computer-readable storage, where the storage medium storing a program which, when executed by a processor, causes the processor to implement the above automatic network control method for a tracker.

### BRIEF DESCRIPTION OF DRAWINGS

FIG. 1 is a flowchart of an automatic network control method for a tracker according to the present disclosure.
FIG. 2a is a schematic diagram of a first connection mode in which a plurality of trackers are close to each other and can be connected to each other according to the present disclosure.
FIG. 2b is a schematic diagram of a second connection mode in which a plurality of trackers are linearly arranged, for example, A is connected to B, B is connected to C, ..., and N is connected to N+1, according to the present disclosure.
FIG. 2c is a schematic diagram of a third connection mode where a plurality of trackers are connected in both the first connection mode and the second connection mode according to the present disclosure.
FIG. 3 is a schematic diagram of network control for a tracker according to the present disclosure.
FIG. 4 is a flowchart of switching between a short-range communication network and a long-range communication network according to the present disclosure.
FIG. 5 is a structural block diagram of an automatic network control apparatus for a tracker according to the present disclosure.

### DETAILED DESCRIPTION

It should be understood that the embodiments described herein are merely used for illustrating the present disclosure, and are not intended to limit the present disclosure.

In the following description, suffixes such as "module", "component", or "unit" used to represent elements are used for facilitate the description of the present disclosure only, and do not have special meanings. Therefore, "module," "component," and "unit" can be used interchangeably.

Currently, there are more and more short-range communication devices. For example, mobile phones, automobiles, IoT products and the like can all realize short-range communication. A tracker can be used in combination with other trackers, mobile phones, automobiles, IoT products, and the like to realize short-range wireless communication and form an IoT network, thereby expanding the communication range. To improve user experience of the tracker and reduce the overall heat generation and overall power consumption of the tracker, the present disclosure proposes low-power automatic network control for a tracker, to realize switching between different network standards according to different application scenarios. In this scheme, the short-range communication mode is used as a main basis for control, and an operational status of a long-range communication circuit is controlled based on a connection status of short-range communication, thereby shortening the duration of long-range communication of the tracker and reducing the overall heat generation and overall power consumption of the tracker.

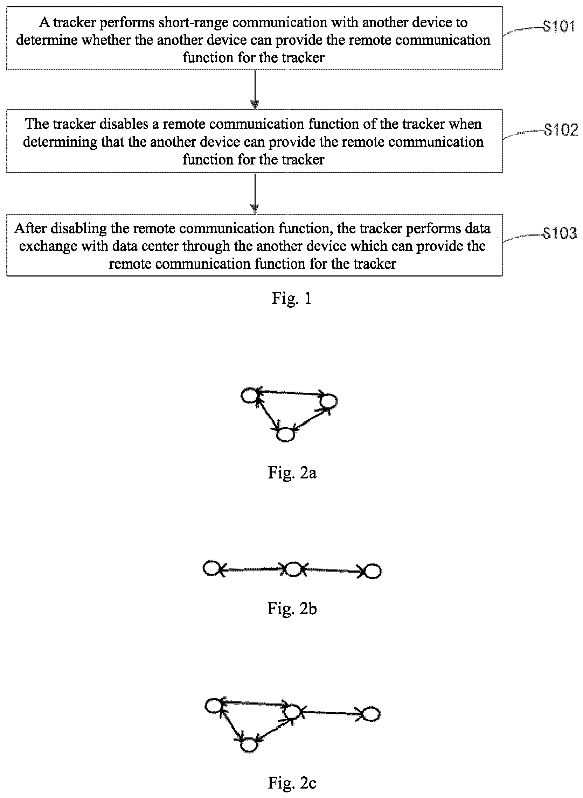

FIG. 1 is a flowchart of an automatic network control method for a tracker according to the present disclosure. As shown in FIG. 1, the method includes operations S101 to S103.

At S101, the tracker performs short-range communication with another device to determine whether the another device can provide the remote communication function for the tracker. At S102, the tracker disables a remote communication function of the tracker when determining that the another device can provide the remote communication function for the tracker. At S103, after disabling the remote communication function, the tracker performs data exchange with a data center through the another device which can provide the remote communication function for the tracker.

In the present disclosure, the tracker may be bound to a to-be-tracked object or perform short-range communication with the to-be-tracked object, to enable the to-be-tracked object such as an IoT device to join a network. In addition, through the another device which can provide the remote communication function for the tracker, the duration of operation of a remote communication function circuit in the tracker is minimized, thereby reducing the overall heat generation and overall power consumption of the tracker and improving user experience of the tracker. Especially when a plurality of trackers operate together, the trackers form a huge IoT network through a short-range communication network. Only a remote communication function of one tracker may need to be enabled in the entire network, thereby minimizing the power consumption of the plurality of trackers operating together.

Further, prior to S101, the method further includes: searching, by the tracker, for another device capable of short-range communication nearby; and connecting, by the tracker when finding another device capable of short-range communication nearby, to the another device capable of short-range communication through a short-range communication mode.

**In** an implementation, the another device includes another tracker and a non-tracker device, and S101 includes: determining, by the tracker, whether a non-tracker device exists in the another device performing short-range communication with the tracker; performing, by the tracker when determining that a non-tracker device exists in the another device performing short-range communication with the tracker, short-range communication with the non-tracker device to determine whether the non-tracker device can provide the remote communication function for the tracker; and in this way, when determining that there is a non-tracker device which can provide the remote communication function for the tracker, the tracker may select the non-tracker device as the remote communication device, to perform data exchange with the data center through the remote communication device. When there are a plurality of non-tracker devices which can provide the remote communication function for the tracker, the tracker may randomly select a non-tracker device as the remote communication device, or may select a non-tracker device with optimal remote communication signal quality as the remote communication device, etc.; Performing, by the tracker when determining that a non-tracker device exists in the another device performing short-range communication with the tracker and the non-tracker device cannot provide the remote communication function for the tracker or when determining that no non-tracker device exists in the another device performing short-range communication with the tracker, short-range communication with the another tracker to determine whether the another tracker can provide the remote communication function for the tracker, in this way, when determining that there is another tracker which can provide the remote communication function for the tracker, the tracker may select the another tracker as the remote communication device, to perform data exchange with the data center through the remote communication device. When there are a plurality of other trackers which can provide the remote communication function for the tracker, the tracker may randomly select one other tracker as the remote communication device, or may select one other tracker as the remote communication device according to a current network selection mode. For example, the tracker selects one other tracker with optimal remote communication signal quality as the remote communication device from the other trackers which can provide the remote communication function for the tracker when the current network selection mode is an optimal network mode; or the tracker selects one other tracker with the lowest power consumption as the remote communication device from the other trackers which can provide the remote communication function for the tracker when the current network selection mode is an optimal power consumption mode.

**In** another implementation, S101 includes: sending, by the tracker to the another device through short-range communication, a request message for communicating with the data center through the remote communication function provided by the another device; and determining, by the tracker, that the another device can provide the remote communication function for the tracker when receiving from the another device a response message indicating that the tracker is allowed to communicate with the data center through the remote communication function provided by the another device; or determining, by the tracker, that the another device cannot provide the remote communication function for the tracker when receiving from the another device a response message indicating that the another device does not have a remote communication capability or a response message indicating that the tracker is not allowed to communicate with the data center through the remote communication function provided by the another device. **In** this way, in case of presence of a plurality of other devices which can provide the remote communication function for the tracker, the tracker selects one other device as a remote communication device from the plurality of other devices which can provide the remote communication function for the tracker, to perform data exchange with the data center through the remote communication device. Upon making a decision, the following two cases are included. **In** a first case, in case of presence of a plurality of other devices which can provide the remote communication function for the tracker and the plurality of other devices which can provide the remote communication function for the tracker including at least one non-tracker device, the tracker selects a non-tracker device as the remote communication device from the at least one non-tracker device. **In** a second case, in case of presence of a plurality of other devices which can provide the remote communication function for the tracker and the plurality of other devices which can provide the remote communication function for the tracker being other trackers, the tracker selects, according to a current network selection mode, one other tracker as the remote communication device from the other trackers which can provide the remote communication function for the tracker. **In** an embodiment, the tracker selects one other tracker with optimal remote communication signal quality as the remote communication device from the other trackers which can provide the remote communication function for the tracker when the current network selection mode is an optimal network mode; or the tracker selects one other tracker with the lowest power consumption as the remote communication device from the other trackers which can provide the remote communication function for the tracker when the current network selection mode is an optimal power consumption mode.

In short, in the present disclosure, when the another device includes both a non-tracker device and another tracker, a remote communication function of the non-tracker device is preferentially used, thereby reducing the power consumption of the tracker and the power consumption of the plurality of trackers operating together.

Further, the method further includes: enabling, by the tracker, the remote communication function of the tracker when determining that the another device cannot provide the remote communication function for the tracker; and performing, by the tracker, data exchange with the data center through the remote communication function of the tracker, and providing the remote communication function for another tracker performing short-range communication with the tracker.

In an implementation, S103 further includes: maintaining, by the tracker after disabling the remote communication function, short-range communication with the selected other device (e.g., device X) which can provide the remote communication function. When the short-range communication between the tracker and the device X is interrupted, a remote communication network such as LTE of the tracker is enabled immediately, a warning indicating that the short-range communication with the device X is interrupted is sent to the data center, and a short-range communication network circuit of the tracker is kept in normal operation.

The present disclosure enables a to-be-tracked object such as an IoT device to join a network, and minimizes the duration of operation of the remote communication network circuit in the tracker. Especially when a plurality of trackers operate together, the trackers form a huge IoT network through a short-range communication network. Only a remote communication function of one device may need to be enabled in the entire network, thereby minimizing the power consumption of the plurality of trackers operating together.

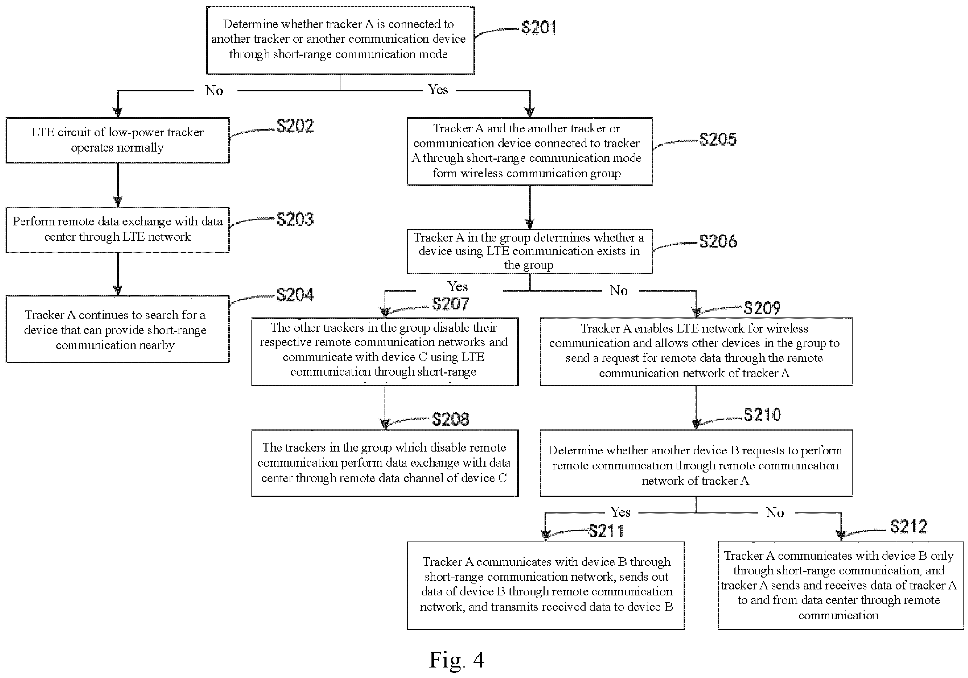

The present disclosure is described in detail with reference to FIG. 2a and FIG. 4.

As a complete product scheme, a tracker device usually may need to achieve a long standby time, low heat generation, and a small structure, and also to use short-range wireless communication and long-range wireless communication for device positioning and power consumption control.

A tracker may operate in the following scenarios.
(1) The tracker operates together with another device such as a mobile phone or a smart wearable device. The tracker sends a request for short-range communication with the another device such as the mobile phone or the smart wearable device, through WiFi, Bluetooth, NFC, or other short-range communication networks. After the another device such as the mobile phone or the smart wearable device accepts the request, the tracker successfully establishes a short-range communication connection with the another device such as the mobile phone or the smart wearable device for short-range communication. After the short-range communication connection is established, the tracker sends a request for "communicating with a data center through a remote communication network of the another device such as the mobile phone or the smart wearable device" to the another device such as the mobile phone or the smart wearable device. If the another device such as the mobile phone or the smart wearable device accepts the request, the tracker disables its long-range wireless communication network such as LTE to stop the operation of long-range wireless communication circuits such as an LTE circuit. In short, the tracker sends location information of the to-be-tracked object to the data center through a communication loop of "tracker - short-range communication network - another device such as mobile phone or smart wearable device - long-range communication network - data center".
(2) A tracker A operates together with a plurality of trackers including a tracker B, a tracker C, a tracker D, ..., and a tracker N. The plurality of trackers are close to each other. As shown in FIG. 2a, every two trackers in close proximity are connected to each other. Alternatively, as shown in FIG. 2b, trackers in close proximity are linearly arranged. For example, A is connected to B, B is connected to C, ..., and N is connected to N+1. Alternatively, as shown in FIG. 2c, both the connection mode of FIG. 2a and the connection mode of FIG. 2b are included.

Each of the plurality of trackers sends a short-range communication request through WiFi, Bluetooth, NFC, or other short-range communication networks. After the trackers pass verification and establishes connections, a tracker Y connected to a largest number of trackers is preferably used as a remote communication device. The tracker Y enables its remote communication network to communicate with the data center. The other trackers disable their respective remote communication network circuits and transmit information to the tracker Y through short-range communication, and the information is then transmitted to the data center through the remote communication network of the tracker Y. In short, the tracker sends location information of the to-be-tracked object to the data center through a communication loop of "tracker - short-range communication network - tracker Y - long-range communication network - data center".

It should be noted that when there are two or more trackers connected to a same largest number of trackers, for example, as shown in FIG. 2a where three trackers are connected to each other and each tracker is connected to two trackers, the three trackers may exchange information through short-range communication. The information may be at least one of power consumption information, battery level information, or factory setting information. In an example where the information includes the power consumption information, the battery level information, and the factory setting information, the tracker with the lowest power consumption is used as the remote communication device. When the power consumption information cannot be obtained or there are trackers having the same power consumption, the tracker with a highest battery level is used as the remote communication device. When the battery level information cannot be obtained or there are trackers having the same battery level, the tracker with a latest ex-factory date is used as the remote communication device.

A network control process for a tracker is as follows.

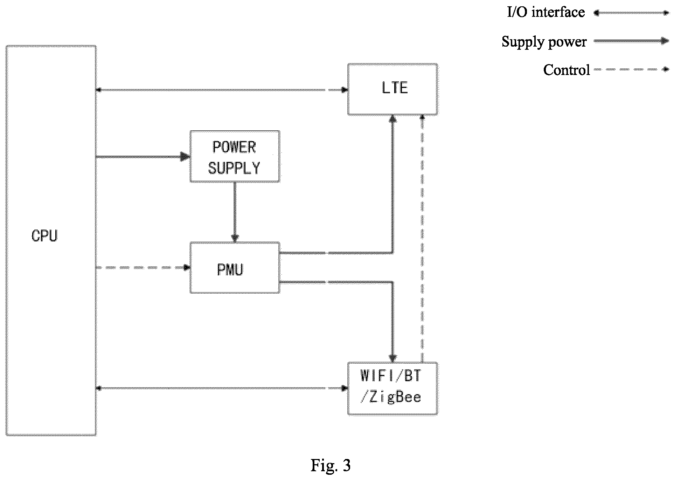

The tracker of the present disclosure can control short-range communication and long-range communication, and has a circuit structure as shown in FIG. 3. The tracker includes a Central Processing Unit (CPU), a Power Supply module, a Power Management Unit (PMU), a short-range communication circuit (e.g., WIFI circuit, Bluetooth circuit, NFC circuit, Zigbee circuit, UWB circuit, RFID circuit, etc.), and a long-range communication circuit (e.g., LTE circuit). The tracker uses the short-range communication circuit therein to communicate with a to-be-tracked object to determine that the tracker is in vicinity of the to-be-tracked object. The tracker uses the long-range communication circuit therein to implement remote communication between the tracker and a data center, and regularly sends a location status of the to-be-tracked object to the data center. In addition, when the distance between the tracker and the to-be-tracked object exceeds a monitoring distance, i.e., when the tracker is far away from the to-be-tracked object, the tracker also may need to send a warning to the data center through long-range communication.

The tracker of the present disclosure can realize low-power automatic network control. First, the tracker may connect to a network remotely, or may connect to another device through a short-range wireless network. For example, the tracker connects to a to-be-tracked object through WIFI, Bluetooth, NFC, Zigbee, UWB, RFID, or other networks; connects to a non-tracker device which can provide the remote communication function, such as a mobile phone, a smart wearable device, or a tablet computer, through WIFI, Bluetooth, NFC, Zigbee, UWB, RFID, or other networks; connects to another tracker through a remote wireless networks (i.e., long-range wireless network or long-range wireless communication network) such as LTE; and so on. When the tracker is not connected to a mobile phone, a smart wearable device, a tablet computer, another tracker, or other devices through the short-range communication network, the tracker switches to its own remote communication network such as LTE, i.e., enables its long-range communication circuit such as an LTE circuit to maintain communication with the data center through the long-range communication network such as LTE, and also maintains normal operation of its short-range communication circuit.

When the tracker is connected to a mobile phone, a smart wearable device, a tablet computer, another tracker, or other devices through the short-range communication network, for example, when the tracker is connected to another device A, the tracker first determines whether the another device A already enables its remote communication network such as LTE, and whether the tracker may need to implement network access by itself. If it is determined that the another device A is connected to a remote communication network such as LTE and the tracker is allowed to communicate with the data center through the remote communication network of the another device A, the PMU stops supplying power to the long-range communication circuit such as the LTE circuit to immediately disable the remote communication network such as LTE of the tracker, and continuously supplies power to the short-range communication circuit such as the WIFI, Bluetooth, NFC, Zigbee, UWB, or RFID circuit to maintain short-distance network communication between the tracker and the another device A.

In addition, when the short-range network communication between the tracker and the another device A is interrupted, the long-range communication network such as LTE of the tracker is enabled immediately, and at the same time, normal operation of the short-range communication network circuit of the tracker is maintained, and an alarm indicating that the short-range communication with the another device A is interrupted is sent to the data center. If it is determined that the another device A does not have a network access function or the tracker is not allowed to communicate with the data center through the remote communication network of the another device A, normal operation of the long-range wireless network such as LTE of the tracker is maintained.

In present disclosure, the short-range communication mode is used as a main basis for control, and an operational status of the long-range communication circuit is controlled based on a remote communication network provisioning status received from another device through the short-range communication circuit. To be specific, when another device can provide the remote communication function for the tracker, the long-range communication network circuit such as the LTE circuit is controlled to be disabled; when no other device can provide the remote communication function for the tracker, the long-range communication network circuit such as the LTE circuit is controlled to be enabled. Whereby, the duration of long-range communication of the tracker is shortened, and the overall heat generation and overall power consumption of the tracker are reduced.

FIG. 4 shows a process of a tracker switching between a short-range communication network and a long-range communication network, including the following operations S201 to S212.

At S201, it is determined whether a tracker A is connected to another tracker or another communication device through a short-range communication mode. When it is determined that the tracker A is connected to another tracker or another communication device through the short-range communication mode, S205 to S206 are performed; otherwise, S202 to S204 are performed.

At S202 to S204, an LTE circuit of the tracker A operates normally to perform remote data exchange with a data center through an LTE network, and continues to search for a device which can provide short-range communication nearby.

At S205, the tracker A and the another tracker or communication device connected to the tracker A through the short-range communication mode form a wireless communication group, and it is determined whether a device using LTE communication exists in the wireless communication group. When it is determined that a device using LTE communication exists in the wireless communication group, S207 to S208 are performed; otherwise, S209 to S210 are performed.

At S207 to S208, when a device C in the wireless communication group uses LTE communication, other trackers including the tracker A in the group disable their respective remote communication networks and communicate with the device C using LTE communication through a short-range communication network, and the trackers in the group which disable their remote communication networks perform data exchange with the data center through a remote data channel of the device C.

At S209 to S210, when no device using LTE communication exists in the wireless communication group, the tracker A enables its own LTE network for wireless communication and allows other devices in the group to perform remote communication through the remote communication network of the tracker A, and then determines whether another device B in the group requests to perform remote communication through the remote communication network of the tracker A. If it is determined that the another device B in the group requests to perform remote communication through the remote communication network of the tracker A, S211 is performed; otherwise, S212 is performed.

At S211, the tracker A communicates with the device B through the short-range communication network, sends out data of the device B through the remote communication network, and transmits received data to the device B.

At S212, the tracker A communicates with the device B only through short-range communication, and the tracker A sends and receives data of the tracker A to and from the data center through remote communication.

In the present disclosure, through the another device which can provide the remote communication function for the tracker, the duration of operation of a remote communication function circuit in the tracker is minimized, thereby reducing the overall heat generation and overall power consumption of the tracker and improving user experience of the tracker. Especially when a plurality of trackers operate together, the trackers form a huge IoT network through a short-range communication network. The present disclosure enables a to-be-tracked object such as an IoT device to join a network. In addition, through the another device which can provide the remote communication function for the tracker, the duration of operation of a remote communication function circuit in the tracker is minimized, thereby reducing the overall heat generation and overall power consumption of the tracker and improving user experience of the tracker. Especially when a plurality of trackers operate together, the trackers form a huge IoT network through a short-range communication network. Only a remote communication function of one tracker may need to be enabled in the entire network, thereby minimizing the power consumption of the plurality of trackers operating together.

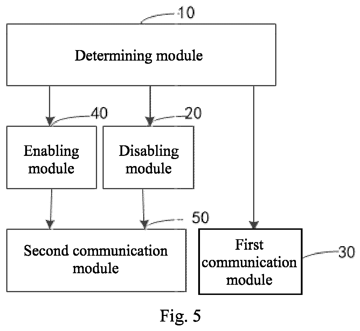

FIG. 5 is a structural block diagram of an automatic network control apparatus for a tracker according to the present disclosure. As shown in FIG. 5, the apparatus may include a determining module 10, a disabling module 20, and a first communication module 30.

The determining module 10 is configured for enabling the tracker to perform short-range communication with another device to determine whether the another device can provide the remote communication function for the tracker. The disabling module 20 is configured for disabling a remote communication function of the tracker when determining that the another device can provide the remote communication function for the tracker. The first communication module 30 is configured for performing data exchange with a data center through the another device which can provide the remote communication function for the tracker.

The determining module 10 is further configured for searching for another device capable of short-range communication in vicinity of the tracker; and when finding another device capable of short-range communication in vicinity of the tracker, connecting the tracker to the another device capable of short-range communication through a short-range communication mode.

**In** an implementation, the another device includes a non-tracker device and another tracker. The determining module 10 is configured for determining whether a non-tracker device exists in the another device performing short-range communication with the tracker; when determining that a non-tracker device exists in the another device performing short-range communication with the tracker, enabling the tracker to perform short-range communication with the non-tracker device to determine whether the non-tracker device can provide the remote communication function for the tracker; and in this way, when determining that there is a non-tracker device which can provide the remote communication function for the tracker, selecting the non-tracker device as the remote communication device to perform data exchange with the data center through the remote communication device. When there are a plurality of non-tracker devices which can provide the remote communication function for the tracker, randomly selecting a non-tracker device as the remote communication device, or selecting a non-tracker device with optimal remote communication signal quality as the remote communication device, etc.; when determining that a non-tracker device exists in the another device performing short-range communication with the tracker and the non-tracker device cannot provide the remote communication function for the tracker or when determining that no non-tracker device exists in the another device performing short-range communication with the tracker, enabling the tracker to perform short-range communication with the another tracker to determine whether the another tracker can provide the remote communication function for the tracker, in this way, when determining that there is another tracker which can provide the remote communication function for the tracker, selecting the another tracker as the remote communication device to perform data exchange with the data center through the remote communication device. When there are a plurality of other trackers which can provide the remote communication function for the tracker, randomly selecting one other tracker as the remote communication device, or may select one other tracker as the remote communication device according to a current network selection mode. For example, selecting one other tracker with optimal remote communication signal quality as the remote communication device from the other trackers which can provide the remote communication function for the tracker when the current network selection mode is an optimal network mode; or selecting one other tracker with lowest power consumption as the remote communication device from the other trackers which can provide the remote communication function for the tracker when the current network selection mode is an optimal power consumption mode.

In another implementation, the determining module 10 is configured for sending, to the another device through short-range communication, a request message for communicating with the data center through the remote communication function provided by the another device; and determining that the another device can provide the remote communication function for the tracker when receiving from the another device a response message indicating that the tracker is allowed to communicate with the data center through the remote communication function provided by the another device; or determining that the another device cannot provide the remote communication function for the tracker when receiving from the another device a response message indicating that the another device does not have a remote communication capability or a response message indicating that the tracker is not allowed to communicate with the data center through the remote communication function provided by the another device. In this way, in case of presence of a plurality of other devices which can provide the remote communication function for the tracker, the determining module 10 selects one other device as a remote communication device from the plurality of other devices which can provide the remote communication function for the tracker to perform data exchange with the data center through the remote communication device. Upon making a decision, the following two cases are included. In a first case, in case of presence of a plurality of other devices which can provide the remote communication function for the tracker and the plurality of other devices which can provide the remote communication function for the tracker including at least one non-tracker device, the determining module 10 selects one non-tracker device as the remote communication device from the at least one non-tracker device. In a second case, in case of presence of a plurality of other devices which can provide the remote communication function for the tracker and the plurality of other devices which can provide the remote communication function for the tracker being other trackers, the determining module 10 selects, according to a current network selection mode, one other tracker as the remote communication device from the other trackers which can provide the remote communication function for the tracker. In an example embodiment, the determining module 10 selects one other tracker with optimal remote communication signal quality as the remote communication device from the other trackers which can provide the remote communication function for the tracker when the current network selection mode is an optimal network mode; or the determining module 10 selects one other tracker with the lowest power consumption as the remote communication device from the other trackers which can provide the remote communication function for the tracker when the current network selection mode is an optimal power consumption mode.

That is to say, in the present disclosure, when the another device includes both a non-tracker device and another tracker, a remote communication function of the non-tracker device is preferentially used, thereby reducing the power consumption of the tracker and the power consumption of the plurality of trackers operating together.

The apparatus further includes an enabling module 40 and a second communication module 50.

The enabling module 40 is configured for enabling the remote communication function of the tracker when determining that the another device cannot provide the remote communication function for the tracker. The second communication module 50 is configured for performing data exchange with the data center through the remote communication function of the tracker.

The apparatus of the present disclosure is applied to a tracker, and enables a to-be-tracked object such as an IoT device to join a network. In addition, through the another device which can provide the remote communication function for the tracker, the duration of operation of a remote communication function circuit in the tracker is minimized, thereby reducing the overall heat generation and overall power consumption of the tracker and improving user experience of the tracker.

The present disclosure further provides an automatic network control device for a tracker. The device includes a memory, a processor, and a program stored in the memory and executable by the processor, where the program, when executed by the processor, causes the processor to implement the automatic network control method for a tracker. The memory includes, but not limited to, a Random Access Memory (RAM), a Read-Only Memory (ROM), an Electrically Erasable Programmable Read-Only Memory (EEPROM), etc. The processor includes, but not limited to, a central processing unit, a digital signal processor, a microprocessor, etc.

The present disclosure further provides a storage medium for computer-readable storage, where the storage medium storing a program which, when executed by a processor, causes the processor to implement the automatic network control method for a tracker. The storage medium includes, but not limited to, a RAM, a ROM, an EEPROM, a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and which can be accessed by a computer.

According to the automatic network control method, apparatus, and device for a tracker, and the storage medium provided in the present disclosure, the tracker performs short-range communication with another device to determine whether the another device can provide the remote communication function for the tracker. The tracker disables a remote communication function of the tracker when determining that the another device can provide the remote communication function for the tracker. After disabling the remote communication function, the tracker performs data exchange with a data center through the another device which can provide the remote communication function for the tracker. The present disclosure enables a to-be-tracked object such as an IoT device to join a network, and minimizes the duration of operation of a remote communication function circuit in the tracker, thereby reducing the overall heat generation and overall power consumption of the tracker and improving user experience of the tracker. Especially when a plurality of trackers operate together, the trackers form a huge IoT network through a short-range communication network. Only a remote communication function of one tracker may need to be enabled in the entire network, thereby minimizing the power consumption of the plurality of trackers operating together.

## Claims

1. An automatic network control method for a tracker, the method comprising:
performing, by the tracker, short-range communication with another device to determine whether the another device can provide a remote communication function for the tracker (S101);
disabling, by the tracker, a remote communication function of the tracker in response to determining that the another device can provide the remote communication function for the tracker (S102); and
performing, by the tracker after disabling the remote communication function, data exchange with a data center through the another device which can provide the remote communication function for the tracker (S103);
**characterized in that**, the method further comprises:
enabling, by the tracker, the remote communication function of the tracker in response to determining that the another device cannot provide the remote communication function for the tracker; and
performing, by the tracker, data exchange with the data center through the remote communication function of the tracker, and providing the remote communication function for another tracker performing short-range communication with the tracker.

2. The method of claim 1, wherein prior to performing, by the tracker, short-range communication with another device to determine whether the another device can provide a remote communication function for the tracker (S101), the method further comprises:
searching, by the tracker, for another device capable of short-range communication nearby; and
connecting, by the tracker in response to finding another device capable of short-range communication nearby, to the another device capable of short-range communication through a short-range communication mode.

3. The method of claim 1, wherein the another device comprises another tracker and a non-tracker device, and performing, by the tracker, short-range communication with another device to determine whether the another device can provide a remote communication function for the tracker (S101) comprises:
determining, by the tracker, whether a non-tracker device exists in the another device performing short-range communication with the tracker;
performing, by the tracker in response to determining that a non-tracker device exists in the another device performing short-range communication with the tracker, short-range communication with the non-tracker device to determine whether the non-tracker device can provide the remote communication function for the tracker; and
performing, by the tracker in response to determining that a non-tracker device exists in the another device performing short-range communication with the tracker and the non-tracker device cannot provide the remote communication function for the tracker or in response to determining that no non-tracker device exists in the another device performing short-range communication with the tracker, short-range communication with the another tracker to determine whether the another tracker can provide the remote communication function for the tracker.

4. The method of claim 1, wherein performing, by the tracker, short-range communication with another device to determine whether the another device can provide a remote communication function for the tracker (S101) comprises:
sending, by the tracker to the another device through short-range communication, a request message for communicating with the data center through the remote communication function provided by the another device; and
determining, by the tracker, that the another device can provide the remote communication function for the tracker, in response to receiving from the another device a response message indicating that the tracker is allowed to communicate with the data center through the remote communication function provided by the another device; or determining, by the tracker, that the another device cannot provide the remote communication function for the tracker, in response to receiving from the another device a response message indicating that the another device does not have a remote communication capability or a response message indicating that the tracker is not allowed to communicate with the data center through the remote communication function provided by the another device.

5. The method of claim 1, wherein after performing, by the tracker, short-range communication with another device to determine whether the another device can provide a remote communication function for the tracker (S 101), the method further comprises:
selecting, by the tracker in response to presence of a plurality of other devices which can provide the remote communication function for the tracker, one other device as a remote communication device from the plurality of other devices which can provide the remote communication function for the tracker, to perform data exchange with the data center through the remote communication device.

6. The method of claim 5, wherein selecting, by the tracker, one other device as a remote communication device from the plurality of other devices which can provide a remote communication function for the tracker comprises:
selecting, by the tracker in response to presence of a plurality of other devices which can provide the remote communication function for the tracker and the plurality of other devices which can provide the remote communication function for the tracker comprising at least one non-tracker device, one non-tracker device as the remote communication device from the at least one non-tracker device; and
selecting, by the tracker according to a current network selection mode in response to presence of a plurality of other devices which can provide the remote communication function for the tracker and the plurality of other devices which can provide the remote communication function for the tracker being other trackers, one other tracker as the remote communication device from the other trackers which can provide the remote communication function for the tracker.

7. The method of claim 6, wherein selecting, by the tracker according to a current network selection mode, one other tracker as the remote communication device from the other trackers which can provide a remote communication function for the tracker comprises:
selecting, by the tracker, one other tracker with optimal remote communication signal quality as the remote communication device from the other trackers which can provide the remote communication function for the tracker, in response to the current network selection mode being an optimal network mode; or
selecting, by the tracker, one other tracker with the lowest power consumption as the remote communication device from the other trackers which can provide the remote communication function for the tracker, in response to the current network selection mode being an optimal power consumption mode.

8. An automatic network control device for a tracker, the device comprising a memory, a processor, and a program stored in the memory and executable by the processor, wherein the program, when executed by the processor, causes the processor to perform the automatic network control method for a tracker according to any one of claims 1 to 7.

9. A storage medium for computer-readable storage, wherein the storage medium storing a program which, when executed by a processor, causes the processor to perform the automatic network control method for a tracker according to any one of claims 1 to 7.

## Patentansprüche

1. Verfahren zur automatischen Netzwerksteuerung für einen Tracker, wobei das Verfahren umfasst:
Durchführen einer Nahbereichskommunikation durch den Tracker mit einer anderen Vorrichtung, um zu bestimmen, ob die andere Vorrichtung eine Fernkommunikationsfunktion für den Tracker bereitstellen kann (S101);
Deaktivieren einer Fernkommunikationsfunktion des Trackers durch den Tracker als Reaktion auf das Bestimmen, dass die andere Vorrichtung die Fernkommunikationsfunktion für den Tracker bereitstellen kann (S102); und
nach dem Deaktivieren der Fernkommunikationsfunktion, Durchführen eines Datenaustauschs durch den Tracker mit einem Rechenzentrum über die andere Vorrichtung, die die Fernkommunikationsfunktion für den Tracker bereitstellen kann (S103);
**dadurch gekennzeichnet, dass** das Verfahren ferner umfasst:
Aktivieren der Fernkommunikationsfunktion des Trackers durch den Tracker als Reaktion auf das Bestimmen, dass die andere Vorrichtung die Fernkommunikationsfunktion für den Tracker nicht bereitstellen kann; und
Durchführen eines Datenaustauschs mit dem Rechenzentrum durch den Tracker über die Fernkommunikationsfunktion des Trackers und Bereitstellen der Fernkommunikationsfunktion für einen anderen Tracker, der eine Nahbereichskommunikation mit dem Tracker durchführt.

2. Verfahren nach Anspruch 1, wobei das Verfahren vor dem Durchführen einer Nahbereichskommunikation durch den Tracker mit einer anderen Vorrichtung, um zu bestimmen, ob die andere Vorrichtung eine Fernkommunikationsfunktion für den Tracker bereitstellen kann (S101), ferner umfasst:
Suchen nach einer anderen Vorrichtung in der Nähe, die zur Nahbereichskommunikation fähig ist, durch den Tracker; und
Herstellen einer Verbindung durch den Tracker, als Reaktion auf das Auffinden einer anderen Vorrichtung in der Nähe, die zur Nahbereichskommunikation fähig ist, mit der anderen Vorrichtung, die zur Nahbereichskommunikation fähig ist, über einen Nahbereichskommunikationsmodus.

3. Verfahren nach Anspruch 1, wobei die andere Vorrichtung einen anderen Tracker und eine Nicht-Tracker-Vorrichtung umfasst und wobei das Durchführen einer Nahbereichskommunikation durch den Tracker mit einer anderen Vorrichtung, um zu bestimmen, ob die andere Vorrichtung eine Fernkommunikationsfunktion für den Tracker bereitstellen kann (S101), umfasst:
Bestimmen durch den Tracker, ob in der anderen Vorrichtung, die eine Nahbereichskommunikation mit dem Tracker durchführt, eine Nicht-Tracker-Vorrichtung vorhanden ist;
Durchführen einer Nahbereichskommunikation durch den Tracker mit der Nicht-Tracker-Vorrichtung, als Reaktion auf das Bestimmen, dass in der anderen Vorrichtung, die eine Nahbereichskommunikation mit dem Tracker durchführt, eine Nicht-Tracker-Vorrichtung vorhanden ist, um zu bestimmen, ob die Nicht-Tracker-Vorrichtung die Fernkommunikationsfunktion für den Tracker bereitstellen kann; und
Durchführen einer Nahbereichskommunikation durch den Tracker mit dem anderen Tracker, um zu bestimmen, ob der andere Tracker die Fernkommunikationsfunktion für den Tracker bereitstellen kann, als Reaktion auf das Bestimmen, dass in der anderen Vorrichtung, die eine Nahbereichskommunikation mit dem Tracker durchführt, eine Nicht-Tracker-Vorrichtung vorhanden ist und die Nicht-Tracker-Vorrichtung die Fernkommunikationsfunktion für den Tracker nicht bereitstellen kann, oder als Reaktion auf das Bestimmen, dass in der anderen Vorrichtung, die eine Nahbereichskommunikation mit dem Tracker durchführt, keine Nicht-Tracker-Vorrichtung vorhanden ist.

4. Verfahren nach Anspruch 1, wobei das Durchführen einer Nahbereichskommunikation durch den Tracker mit einer anderen Vorrichtung, um zu bestimmen, ob die andere Vorrichtung eine Fernkommunikationsfunktion für den Tracker bereitstellen kann (S101), umfasst:
Senden einer Anforderungsnachricht durch den Tracker an die andere Vorrichtung über die Nahbereichskommunikation, um über die von der anderen Vorrichtung bereitgestellte Fernkommunikationsfunktion mit dem Rechenzentrum zu kommunizieren; und
Bestimmen durch den Tracker, dass die andere Vorrichtung die Fernkommunikationsfunktion für den Tracker bereitstellen kann, als Reaktion auf das Empfangen einer Antwortnachricht von der anderen Vorrichtung, die angibt, dass es dem Tracker gestattet ist, über die von der anderen Vorrichtung bereitgestellte Fernkommunikationsfunktion mit dem Rechenzentrum zu kommunizieren; oder Bestimmen durch den Tracker, dass die andere Vorrichtung die Fernkommunikationsfunktion für den Tracker nicht bereitstellen kann, als Reaktion auf das Empfangen einer Antwortnachricht von der anderen Vorrichtung, die angibt, dass die andere Vorrichtung keine Fernkommunikationsfähigkeit besitzt, oder einer Antwortnachricht, die angibt, dass es dem Tracker nicht gestattet ist, über die von der anderen Vorrichtung bereitgestellte Fernkommunikationsfunktion mit dem Rechenzentrum zu kommunizieren.

5. Verfahren nach Anspruch 1, wobei das Verfahren nach dem Durchführen einer Nahbereichskommunikation durch den Tracker mit einer anderen Vorrichtung, um zu bestimmen, ob die andere Vorrichtung eine Fernkommunikationsfunktion für den Tracker bereitstellen kann (S101), ferner umfasst:
Auswählen, durch den Tracker als Reaktion auf das Vorhandensein einer Vielzahl anderer Vorrichtungen, die die Fernkommunikationsfunktion für den Tracker bereitstellen können, einer anderen Vorrichtung als Fernkommunikationsvorrichtung aus der Vielzahl anderer Vorrichtungen, die die Fernkommunikationsfunktion für den Tracker bereitstellen können, um einen Datenaustausch mit dem Rechenzentrum über die Fernkommunikationsvorrichtung durchzuführen.

6. Verfahren nach Anspruch 5, wobei das Auswählen einer anderen Vorrichtung als Fernkommunikationsvorrichtung aus der Vielzahl anderer Vorrichtungen, die eine Fernkommunikationsfunktion für den Tracker bereitstellen können, durch den Tracker umfasst:
Auswählen, durch den Tracker als Reaktion auf das Vorhandensein einer Vielzahl anderer Vorrichtungen, die die Fernkommunikationsfunktion für den Tracker bereitstellen können, wobei die Vielzahl anderer Vorrichtungen, die die Fernkommunikationsfunktion für den Tracker bereitstellen können, mindestens eine Nicht-Tracker-Vorrichtung umfasst, einer Nicht-Tracker-Vorrichtung als Fernkommunikationsvorrichtung aus der mindestens einen Nicht-Tracker-Vorrichtung; und
Auswählen eines anderen Trackers als Fernkommunikationsvorrichtung aus den anderen Trackern, die die Fernkommunikationsfunktion für den Tracker bereitstellen können, durch den Tracker gemäß einem aktuellen Netzwerkauswahlmodus als Reaktion auf das Vorhandensein einer Vielzahl anderer Vorrichtungen, die die Fernkommunikationsfunktion für den Tracker bereitstellen können, wobei die Vielzahl anderer Vorrichtungen, die die Fernkommunikationsfunktion für den Tracker bereitstellen können, andere Tracker sind.

7. Verfahren nach Anspruch 6, wobei das Auswählen eines anderen Trackers als Fernkommunikationsvorrichtung aus den anderen Trackern, die eine Fernkommunikationsfunktion für den Tracker bereitstellen können, durch den Tracker gemäß einem aktuellen Netzwerkauswahlmodus umfasst:
Auswählen eines anderen Trackers mit optimaler Fernkommunikationssignalqualität als Fernkommunikationsvorrichtung aus den anderen Trackern, die die Fernkommunikationsfunktion für den Tracker bereitstellen können, durch den Tracker als Reaktion darauf, dass der aktuelle Netzwerkauswahlmodus ein optimaler Netzwerkmodus ist; oder
Auswählen eines anderen Trackers mit dem niedrigsten Stromverbrauch als Fernkommunikationsvorrichtung aus den anderen Trackern, die die Fernkommunikationsfunktion für den Tracker bereitstellen können, durch den Tracker als Reaktion darauf, dass der aktuelle Netzwerkauswahlmodus ein optimaler Stromverbrauchsmodus ist.

8. Vorrichtung zur automatischen Netzwerksteuerung für einen Tracker, wobei die Vorrichtung einen Speicher, einen Prozessor und ein Programm umfasst, das in dem Speicher gespeichert ist und von dem Prozessor ausgeführt werden kann, wobei das Programm, wenn es von dem Prozessor ausgeführt wird, den Prozessor dazu veranlasst, das Verfahren zur automatischen Netzwerksteuerung für einen Tracker nach einem der Ansprüche 1 bis 7 durchzuführen.

9. Speichermedium für einen computerlesbaren Speicher, wobei das Speichermedium ein Programm speichert, das, wenn es von einem Prozessor ausgeführt wird, den Prozessor dazu veranlasst, das Verfahren zur automatischen Netzwerksteuerung für einen Tracker nach einem der Ansprüche 1 bis 7 durchzuführen.

## Revendications

1. Procédé de commande automatique de réseau pour un dispositif de suivi, le procédé comprenant :
effectuer, par le dispositif de suivi, une communi\cation à courte portée avec un autre dispositif pour déterminer si l'autre dispositif peut fournir une fonction de communication à distance pour le dispositif de suivi (S101) ;
désactiver, par le dispositif de suivi, une fonction de communication à distance du dispositif de suivi en réponse à la détermination que l'autre dispositif peut fournir la fonction de communication à distance pour le dispositif de suivi (S102) ; et
effectuer, par le dispositif de suivi après avoir désactivé la fonction de communication à distance, un échange de données avec un centre de données à travers l'autre dispositif qui peut fournir la fonction de communication à distance pour le dispositif de suivi (S103) ;
**caractérisé en ce que** le procédé comprend en outre :
activer, par le dispositif de suivi, la fonction de communication à distance du dispositif de suivi en réponse à la détermination que l'autre dispositif ne peut pas fournir la fonction de communication à distance pour le dispositif de suivi ; et
effectuer, par le dispositif de suivi, un échange de données avec le centre de données à travers la fonction de communication à distance du dispositif de suivi, et fournir la fonction de communication à distance pour un autre dispositif de suivi effectuant une communication à courte portée avec le dispositif de suivi.

2. Procédé selon la revendication 1, dans lequel avant d'effectuer, par le dispositif de suivi, une communication à courte portée avec un autre dispositif pour déterminer si l'autre dispositif peut fournir une fonction de communication à distance pour le dispositif de suivi (S101), le procédé comprend en outre :
rechercher, par le dispositif de suivi, un autre appareil capable de communication à courte portée à proximité ; et
connecter, par le dispositif de suivi en réponse à la découverte d'un autre dispositif capable de communication à courte portée à proximité, à l'autre dispositif capable de communication à courte portée via un mode de communication à courte portée.

3. Procédé selon la revendication 1, dans lequel l'autre dispositif comprend un autre dispositif de suivi et un dispositif non-suiveur, et la réalisation, par le dispositif de suivi, d'une communication à courte portée avec un autre dispositif pour déterminer si l'autre dispositif peut fournir une fonction de communication à distance pour le dispositif de suivi (S101) comprend :
déterminer, par le dispositif de suivi, s'il existe un dispositif non-suiveur dans l'autre dispositif effectuant une communication à courte portée avec le dispositif de suivi ;
effectuer, par le dispositif de suivi en réponse à la détermination qu'un dispositif non-suiveur existe dans l'autre dispositif effectuant une communication à courte portée avec le dispositif de suivi, une communication à courte portée avec le dispositif non-suiveur pour déterminer si le dispositif non-suiveur peut fournir la fonction de communication à distance pour le dispositif de suivi ; et
effectuer, par le dispositif de suivi en réponse à la détermination qu'un dispositif non-suiveur existe dans l'autre dispositif effectuant une communication à courte portée avec le dispositif de suivi et le dispositif non-suiveur ne peut pas fournir la fonction de communication à distance pour le dispositif de suivi ou en réponse à la détermination qu'aucun dispositif non-suiveur n'existe dans l'autre dispositif effectuant une communication à courte portée avec le dispositif de suivi, une communication à courte portée avec l'autre dispositif de suivi pour déterminer si l'autre dispositif de suivi peut fournir la fonction de communication à distance pour le dispositif de suivi.

4. Procédé selon la revendication 1, dans lequel effectuer, par le dispositif de suivi, une communication à courte portée avec un autre dispositif pour déterminer si l'autre dispositif peut fournir une fonction de communication à distance pour le dispositif de suivi (S101), comprend :
envoyer, par le dispositif de suivi à l'autre dispositif à travers une communication à courte portée, un message de demande de communication avec le centre de données à travers la fonction de communication à distance fournie par l'autre dispositif ; et
déterminer, par le dispositif de suivi, que l'autre dispositif peut fournir la fonction de communication à distance pour le dispositif de suivi, en réponse à la réception depuis l'autre dispositif d'un message de réponse indiquant que le dispositif de suivi est autorisé à communiquer avec le centre de données à travers la fonction de communication à distance fournie par l'autre dispositif ; ou déterminer, par le dispositif de suivi, que l'autre dispositif ne peut pas fournir la fonction de communication à distance pour le dispositif de suivi, en réponse à la réception depuis l'autre dispositif d'un message de réponse indiquant que l'autre dispositif n'a pas de capacité de communication à distance ou d'un message de réponse indiquant que le dispositif de suivi n'est pas autorisé à communiquer avec le centre de données à travers la fonction de communication à distance fournie par l'autre dispositif.

5. Procédé selon la revendication 1, dans lequel après d'effectuer, par le dispositif de suivi, une communication à courte portée avec un autre dispositif pour déterminer si l'autre dispositif peut fournir une fonction de communication à distance pour le dispositif de suivi (S101), le procédé comprend en outre :
sélectionner, par le dispositif de suivi en réponse à la présence d'une pluralité d'autres dispositifs qui peuvent fournir la fonction de communication à distance pour le dispositif de suivi, un autre dispositif en tant que dispositif de communication à distance parmi la pluralité d'autres dispositifs qui peuvent fournir la fonction de communication à distance pour le dispositif de suivi, pour effectuer un échange de données avec le centre de données à travers le dispositif de communication à distance.

6. Procédé selon la revendication 5, dans lequel la sélection, par le dispositif de suivi, d'un autre dispositif en tant que dispositif de communication à distance parmi la pluralité d'autres dispositifs qui peuvent fournir une fonction de communication à distance pour le dispositif de suivi comprend :
sélectionner, par le dispositif de suivi en réponse à la présence d'une pluralité d'autres dispositifs qui peuvent fournir la fonction de communication à distance pour le dispositif de suivi et la pluralité d'autres dispositifs qui peuvent fournir la fonction de communication à distance pour le dispositif de suivi comprenant au moins un dispositif non-suiveur, un dispositif non-suiveur en tant que dispositif de communication à distance, parmi au moins un dispositif non-suiveur ; et
sélectionner, par le dispositif de suivi selon un mode de sélection de réseau actuel en réponse à la présence d'une pluralité d'autres dispositifs qui peuvent fournir la fonction de communication à distance pour le dispositif de suivi et la pluralité d'autres dispositifs qui peuvent fournir la fonction de communication à distance pour le dispositif de suivi étant d'autres dispositifs de suivi, un autre dispositif de suivi en tant que dispositif de communication à distance, parmi les autres dispositifs de suivi qui peuvent fournir la fonction de communication à distance pour le dispositif de suivi.

7. Procédé selon la revendication 6, dans lequel la sélection, par le dispositif de suivi selon un mode de sélection de réseau actuel, d'un autre dispositif de suivi en tant que dispositif de communication à distance parmi les autres dispositifs de suivi qui peuvent fournir une fonction de communication à distance pour le dispositif de suivi comprend :
sélectionner, par le dispositif de suivi, un autre dispositif de suivi avec une qualité de signal de communication à distance optimale en tant que dispositif de communication à distance parmi les autres dispositifs de suivi qui peuvent fournir la fonction de communication à distance pour le dispositif de suivi, en réponse au mode de sélection de réseau actuel étant un mode de réseau optimal ; ou
sélectionner, par le dispositif de suivi, un autre dispositif de suivi ayant la consommation d'énergie la plus faible en tant que dispositif de communication à distance parmi les autres dispositifs de suivi qui peuvent fournir la fonction de communication à distance pour le dispositif de suivi, en réponse au mode de sélection de réseau actuel étant un mode de consommation d'énergie optimal.

8. Dispositif de commande automatique de réseau pour un dispositif de suivi, le dispositif comprenant une mémoire, un processeur et un programme stocké dans la mémoire et exécutable par le processeur, dans lequel le programme, lorsqu'il est exécuté par le processeur, amène le processeur à exécuter le procédé de commande automatique de réseau pour un dispositif de suivi selon l'une quelconque des revendications 1 à 7.

9. Support de stockage pour un stockage lisible par ordinateur, dans lequel le support de stockage stocke un programme qui, lorsqu'il est exécuté par un processeur, amène le processeur à exécuter le procédé de commande de réseau automatique pour un dispositif de suivi selon l'une quelconque des revendications 1 à 7.
